# EUROPEAN PATENT APPLICATION

(11) **EP 1 160 666 A2**
(43) Date of publication of application: **05.12.2001**
(21) Application number: 01303146.3
(22) Date of filing: 02.04.2001
(51) Int. Cl.: G06F 9/445

(54) **Switching versions of software in a system background**

(30) Priority: 27.04.2000 US 560417
(71) Applicant: NCR INTERNATIONAL INC., Dayton, Ohio 45479 (US)
(72) Inventor: Lewis, Donald J., Claremont CA 91711 (US); Liu, Zhi, San Diego, CA 92128 (US)
(74) Representative: Cleary, Fidelma

(57) **Abstract**

A multi-node parallel processing system includes modules to perform version switching of software. In one arrangement, the operating system running in each node of the parallel processing is a WINDOWS® operating system. While one software version is running in the system, another version may be installed and stored in a different versioned directory. The installed software version may be marked as the desired version. If a version switch is to be performed, version switch software instances may be launched in each of the nodes. The version switch software instances then determine which of the nodes in the parallel processing system are available to perform the version switch. One of the version switch software instances is marked as the master instance. The master instance accesses the nodes (identified as available to perform the version switch) in the system to determine if a version switch is to be performed. If so, the current running software version is stopped and unloaded and the new version loaded.

## Description

The invention relates to switching versions of software in a system, such as a system including parallel processing nodes.

Software in a computer system may be made up of many layers. The highest layer is usually referred to as the application layer, followed by lower layers that include the operating system, device drivers (which usually are part of the operating system), and other layers. In a system that is coupled to a network, various transport and network layers may also be present.

Software is continuously evolving to provide additional features, improvements, and functionalities. Bugs that may exist in previous versions may be removed in a newer version. Features that are desired by users may be added into later versions of software. Any of the various layers that may exist in a system may be upgraded to newer versions.

A widely used operating system includes the WINDOWS® series of operating systems, including WINDOWS® 95, WINDOWS® 98, WINDOWS® NT, and WINDOWS® 2000, by Microsoft Corporation. In a WINDOWS® operating system, such as in a WINDOWS® NT operating system, the uninstall/install operation typically performed to change versions of an application program may take a relatively large amount of time. To perform a version switch in conventional systems, the software is first stopped, followed by uninstallation of the current version followed by installation of the new version, which typically involves copying of associated files and updating of configuration files and directories.

The amount of time needed to perform software version switching according to conventional techniques may impact the availability of an application. This may have an unacceptable performance hit on applications that need to be continuously running on a system. For example, if the application is a database management application that controls access to a database, unavailability of the application for any extended time period may prevent access to the database during the down period.

Application programs may run on single processor systems, multiprocessor systems, or multi-node parallel processing systems. Examples of single processor systems include standard desktop or portable systems. A multiprocessor system may include a single node that includes multiple processors running in the node. Such systems may include symmetric multiprocessor (SMP) systems. A multi-node parallel processing system may include multiple nodes that may be connected by an interconnect network. Application programs may be loaded on each of these nodes and run in parallel.

One type of application program that may be advantageously run on a multi-node parallel processing system includes a data warehousing application. Generally, a data warehouse may include copies of transaction data (e.g., retail transaction data) that have been structured for query and analysis or reporting. The retail transaction data may track purchases made by users of goods and services from participating retail sources. The data warehousing application may perform the collection, management, analysis, and reporting of such transaction data. The volume of data involved in data warehouse systems may be extremely large, typically in the gigabyte range and sometimes in the terabyte range. To manage such a large amount of data, data warehouse applications are typically run on a multi-node parallel processing system. Because of the large amounts of transactions that are being processed by such applications, and because of a continuing need for processing of such transactions, it may be undesirable to shut down the applications to perform an upgrade for any extended period of time.

It is an object of the present invention to provide an improved method and apparatus for switching versions of software.

From a first aspect, the invention resides in a method of switching between versions of software in a system having a first number of processing nodes, comprising: storing plural versions including a running version and a desired version of the software in the system; identifying less than the first number of nodes capable of performing a software version switch; and selecting the desired version of the software to run in each of the identified processing nodes. This may be performed before starting the running version of the software or after the running version of the software is started. The nodes are identified by determining if a predetermined response is received when starting the version switch and each identified node is preferably checked to ensure that the desired version is available. A list of nodes participating in the version switch is preferably maintained and checks are made to verify that each node is running the same operating system version.

The running version of the software is preferably stored in a first directory and the desired version in a second directory, the first and second directories being provided in each of the processing nodes. A version switch software instance is started in each of the identified nodes and one of the version switch software instances is selected as a master instance. This master instance preferably determines if version switching is desired in any of the identified nodes and issues a version switch command to each node to perform switching to the desired version. Determination of whether version switching is desired is preferably achieved by accessing control information including flags identifying a desired version and a running version. The control information indicating the running version is preferably stored in each identified node while that indicating the desired version is stored in at least one of the identified nodes, whether a version switch is indicated being determined on the basis of the stored control information. After version switching, each node preferably updates its control information.

From a further aspect, the invention may be expressed as an article including one or more machine-readable storage media containing instructions for performing software version switching in a system having a plurality of nodes, the instructions when executed causing the system to perform the method described above. The invention also resides in a computer program comprising program instructions for causing a computer system to perform the method described above. The invention may also be expressed as a data structure stored in memory for use in performing switching between versions of software in a parallel processing system, the data structure comprising instructions which when executed cause the system to perform the above method.

From another aspect, the invention resides in a parallel processing system comprising a plurality of nodes each running a first version of a software module and containing at least another version of the software module and each node adapted to launch a startup instance to perform a switch between the first version of the software and the other version in each of the plurality of nodes. One of the startup instances may be selected as a master startup instance which determines if a version switch of the software module is to be performed.

Each node preferably stops execution of the software module if the software module is running and may unload the first version of the software module and/or load the other version of the software module. Alternatively, the system may comprise a tool to install the other version of the software module while the first version is running. Each node preferably contains control information to identify an executing software module version and a desired software version. The system may also comprise one or more storage devices containing a first directory to store at least a portion of the first version and a second directory to store at least a portion of the second version. Preferably, each node will include multiple directories to store corresponding ones of the first version and at least one other version. In a preferred embodiment, each node includes a WINDOWS® operating system and the first version of the software module may include a kernel-mode driver.

To enhance the availability of software programs to customers and users, the amount of down time of a system (such as a multi-node parallel processing system) when performing software version switching is reduced. As used here, "switching" may refer to upgrading to a later version of the software or downgrading to a prior version of the software. To reduce down time of a system, a second software version may be installed into a system while a first version of the software is still running so that multiple versions of the software may be present at the same time. When it is desired to switch to a different software version, routines are started in each node of the multi-node parallel processing system to determine the desired software version and to switch to the desired version from the currently running version. The routines also perform a verification check to ensure that each node is running the same version. Also, in accordance with some embodiments, if not all nodes in the system are available for the version switch, then the version switch may be performed on a subset (less than all) of the nodes in the system.

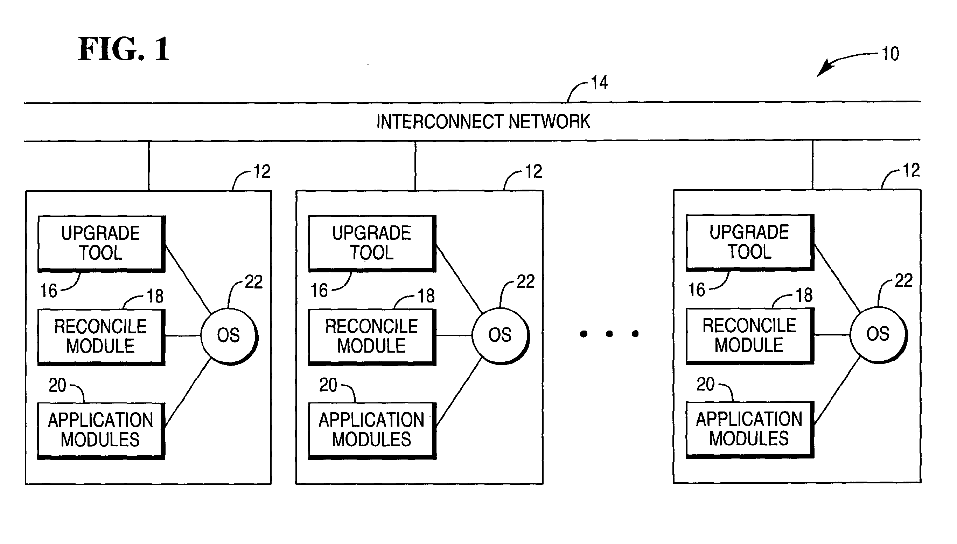

Referring to Fig. 1, a system 10 in accordance with one embodiment may be a multi-node parallel processing system with a plurality of nodes 12. The number of nodes 12 may be greater than or equal to two. The nodes 12 are coupled by an interconnect network 14 to enable communication between the nodes 12. Each of the nodes 12 includes an upgrade tool 16 to allow installation of different versions of software into the nodes 12. In accordance with some embodiments, multiple versions of software may be resident in each of the nodes 12, with one version designated the running version.

Each node 12 also includes a reconcile module 18 that controls the switching of software versions as well as verifies that each node 12 runs the same version in the parallel processing system 10. Application modules 20 may also be running in each of the nodes 12. In one embodiment, the application modules 20 may be part of a data warehouse system that stores, manages, analyzes, and reports transaction data, e.g., retail transaction data. In other embodiments, other types of application modules 20 may be present.

The software modules in each of the nodes 12 are run under an operating system 22. In one embodiment, the operating system 22 may be a WINDOWS® NT operating system from Microsoft Corporation. In further embodiments, other WINDOWS® operating systems or other types of operating systems may be employed.

In this description, switching between different versions of the application modules 20 is discussed. However, in further embodiments, the same concepts, processes and apparatus may be applied to switching versions of other software layers, such as driver routines (including kernel-
Other features and embodiments will become apparent from the following description, from the drawings, and from the claims.

Embodiments of the invention will now be described with reference to the accompanying drawings in which:
Fig. 1 is a block diagram of an embodiment of a parallel processing system including multiple nodes.
Fig. 2 is a block diagram of components in one of the nodes of Fig. 1 in accordance with an embodiment.
Fig. 3 is a flow diagram of an installation process in accordance with an embodiment of a new software version in the nodes of Fig. 1.
Figs. 4A-4B are flow diagrams of a reconcile process to perform the software version switching in accordance with an embodiment.
Fig. 5 is a flow diagram of a rules checking process performed during the reconcile process.

Referring to Fig. 1, a system 10 in accordance with one embodiment may be a multi-node parallel processing system with a plurality of nodes 12. The number of nodes 12 may be greater than or equal to two. The nodes 12 are coupled by an interconnect network 14 to enable communication between the nodes 12. Each of the nodes 12 includes an upgrade tool 16 to allow installation of different versions of software into the nodes 12. In accordance with some embodiments, multiple versions of software may be resident in each of the nodes 12, with one version designated the running version.

Each node 12 also includes a reconcile module 18 that controls the switching of software versions as well as verifies that each node 12 runs the same version in the parallel processing system 10. Application modules 20 may also be running in each of the nodes 12. In one embodiment, the application modules 20 may be part of a data warehouse system that stores, manages, analyzes, and reports transaction data, e.g., retail transaction data. In other embodiments, other types of application modules 20 may be present.

The software modules in each of the nodes 12 are run under an operating system 22. In one embodiment, the operating system 22 may be a WINDOWS® NT operating system from Microsoft Corporation. In further embodiments, other WINDOWS® operating systems or other types of operating systems may be employed.

In this description, switching between different versions of the application modules 20 is discussed. However, in further embodiments, the same concepts, processes and apparatus may be applied to switching versions of other software layers, such as driver routines (including kernel-mode drivers), transport and network modules, operating system modules, and so forth. The WINDOWS® operating system provides for execution of software in user mode or kernel mode, which refers to the hardware privilege level at which a processor is executing the software. Kernel mode has a higher privilege level than user mode, and software (such as a driver module) executing at the kernel mode is given much greater privileges with respect to the system hardware.

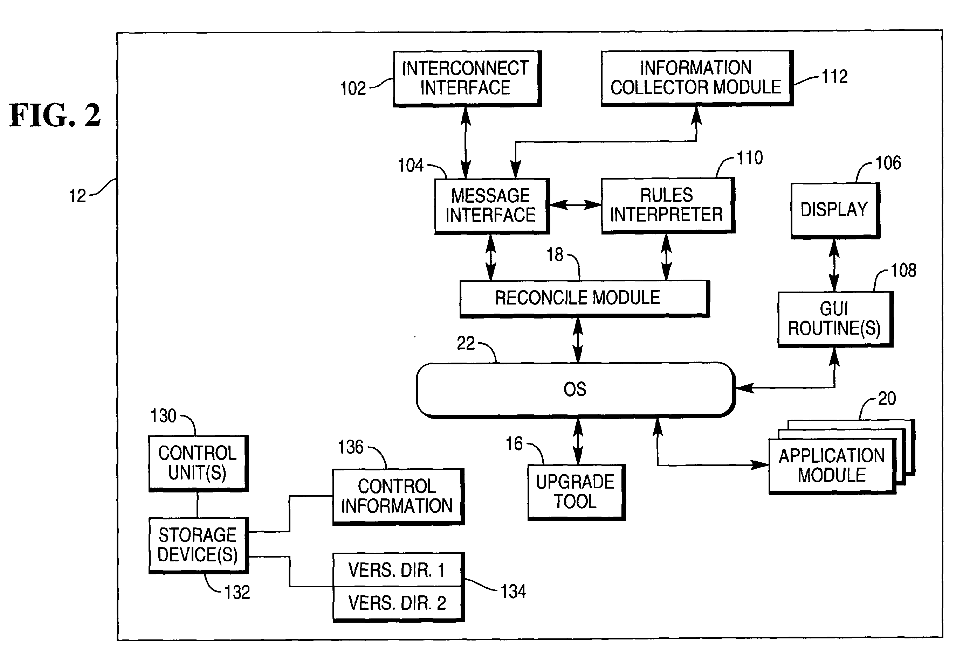

Referring to Fig. 2, each node 12 includes various components. The operating system 22 provides an environment in which various other modules can run, including the upgrade tool 16, the reconcile module 18, application modules 20, and other routines or modules. The node 12 also includes an interconnect interface 102 that is adapted to communicate over the interconnect network 14. A messaging interface 104 controls the communication of messages through the interconnect interface 102 over the interconnect network 14. In addition, the node 12 includes a display 106 and a graphical user interface (GUI) routine 108 that controls the presentation of user interfaces on the display 106. The GUI routine 108 may be capable of receiving selections made by the user on one or more selectors presented in the displayed user interface.

The upgrade tool 16 is used to install different versions of an application module into each node of the system 10. The upgrade tool 16 may allow installations of new software versions individually on each node. Alternatively, the upgrade tool 16 may perform a parallel upgrade by enabling the installation of a new software version in parallel across the multiple nodes 12 in the system 10. In either case, the installation may be performed while the currently running version is still active. However, in other embodiments, there may be a requirement that the currently running version be stopped before installation can proceed.

When a new version of an application module is installed, the upgrade tool 16 may specify if the installed version is the "desired" version. The desired version is the version identified as the one that should be run next. Then, if a version switch is desired, the reconcile module 18 may be invoked to perform the following: to check which nodes are available to perform the version switch; to check that all available nodes contain the desired version of the application module 20; and to switch to the desired version.

In one embodiment, the reconcile module 18 interacts with a rules interpreter module 110, which performs various rules checking (discussed further below) associated with the software version switch. The reconcile module 18 may also cooperate with an information collector module 112 executing on each node 12 so that one of the nodes (designated the master node) may collect control information from the other nodes. After the reconcile module 18 (the master instance) is established, it executes the rules interpreter module 110, which in turn indirectly executes the information collector module 112 on each node via the message interface 104.

The various software modules and routines in each node 12 are executable on one or more control units 130. Instructions and data associated with the various software modules or routines may be stored in one or more storage devices 132.

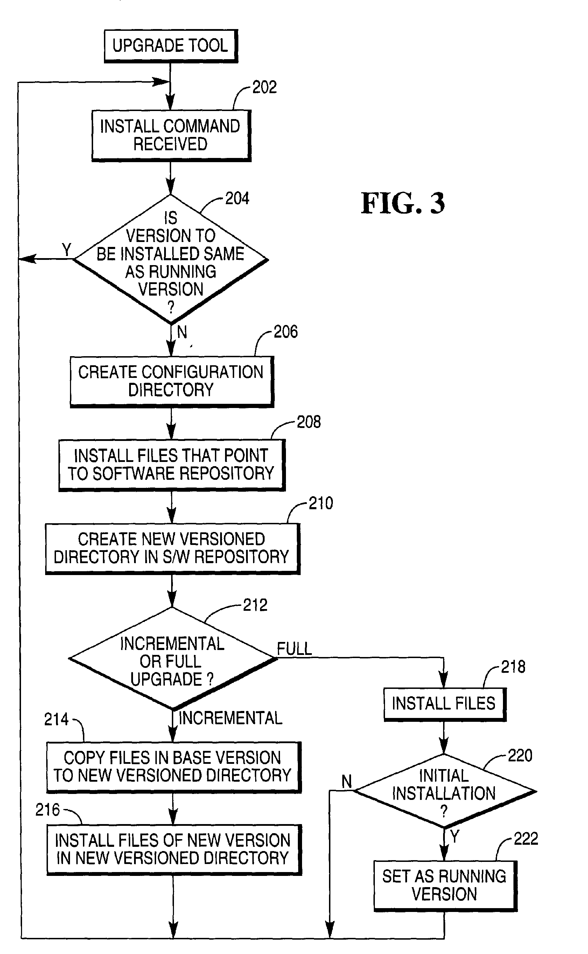

Referring to Fig. 3, a process performed by the upgrade tool 16 is illustrated. The upgrade tool first receives an install command (at 202) to install a new version of an application module. The installation may be performed individually on each node 12 or in parallel across the nodes 12. The install command may be issued by a user through the user interface, or the install command may be issued remotely. The upgrade tool next verifies (at 204) to determine if the version to be installed is the same as the running version; that is, the version that is currently designated as the version that is running or that will be run in the system 10. If the versions are the same, then nothing further is performed.

If the versions are not the same, then the upgrade tool 16 may create (at 206) a configuration directory, if this is the first installation of the application module. If this is not the first installation, then a configuration directory may already exist. Next, the upgrade tool 16 installs (at 208) a set of default files that point to the location of the software repository, which is the directory in which different versions of an application are stored. The software repository may contain what are referred to as "versioned directories," with one versioned directory for each version of the application module that is resident in the node 12. Versioned directories 134 may be stored in the one or more storage devices 132 (Fig. 2). The use of multiple versioned directories in the main software repository provides the mechanism by which the running software is isolated from other versions of the same software. In one embodiment, the full name of each versioned directory may include a unique version number.

The configuration directory provides the mechanism by which files that are common to all versions of the software or that never change from one version to the next are maintained. These files may include files that describe the actual software configuration, such as the current running version, and the location and rules to map a file name into a versioned file and the location of user/customer application files. The version that is being installed is marked (at 208) as the desired version of the software. A control directory may be used to store control information, such as control information indicating the running version of an application module, the desired version, and all available versions. Control information 136 may also be stored in the one or more storage devices 132 (Fig. 2).

Next, the upgrade tool 16 creates a new versioned directory (at 210) in the software repository to store the new version of the application module. The upgrade tool 16 next determines (at 212) if the update is an incremental update or a full upgrade. If the upgrade is as incremental update, then the upgrade tool 16 copies (at 214) files in the base version to the new versioned directory. The files of the new version are then installed into the new versioned directory in the software repository.

However, if the update is a full upgrade, then all of the files in the new version of the software are installed (at 218) in the newly created versioned directory in the software repository. The upgrade tool 16 next checks (at 220) to determine if this is the initial installation of the software. If so, then the version being installed is marked as the running version (at 222) so that upon the next boot, the installed software version is loaded and run.

The same or similar process may also be performed for other software layers, such as kernel-mode driver modules.

After installation of a new version of an application module (or other software module), the version switch may or may not be performed automatically. In one embodiment, a user prompt is needed to start the version switch process. Thus, even though a new version of an application module has been installed, the current running version continues to be the running version run until the user indicates the performance of a version switch. The user may issue the version switch command through the graphical user interface, a command line, or performing a reboot of the system. In another embodiment, the upgrade tool 16 may start the version switch process automatically after installation of a new version has completed.

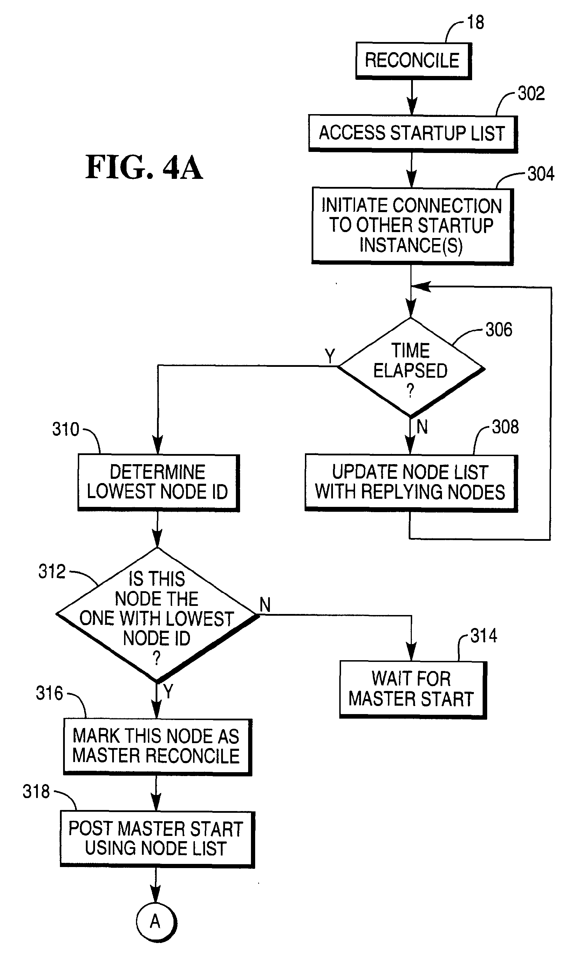

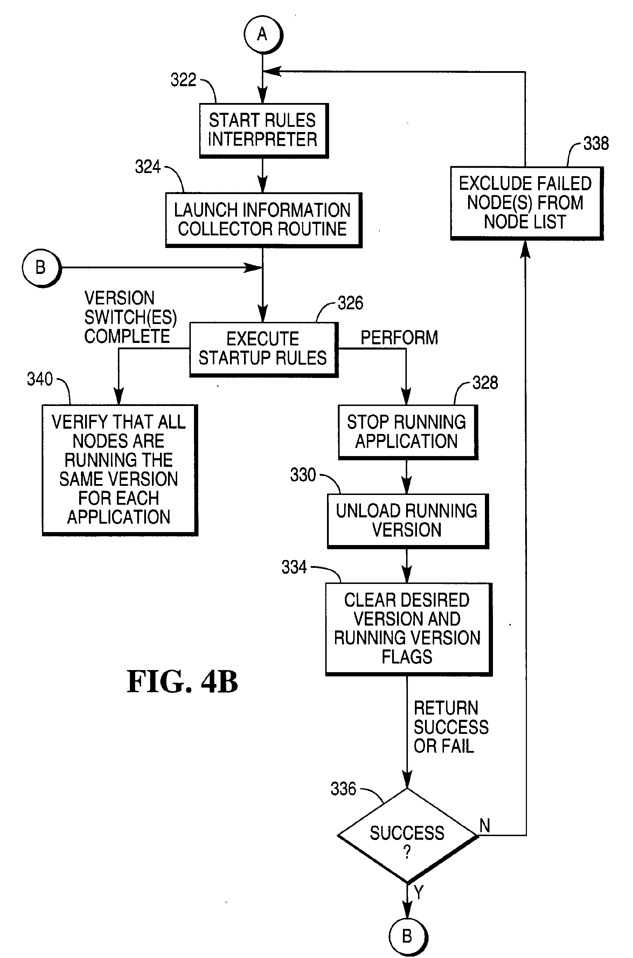

Referring to Figs. 4A-4B, the process performed by the reconcile module 18 is illustrated. The reconcile module 18 may be started by one of several mechanisms. First, it may be started by the operating system 22 when the system is first booted. Alternatively, the reconcile module 18 may be started in response to user input from a command line or from a graphical user interface presented on the display 106. The reconcile module 18 may also be launched by the upgrade tool 16. Other mechanisms for starting the reconcile module 18 may be available.

An instance of the reconcile module 18 is executed on each of the nodes 12 in the parallel processing system 10. Each reconcile module instance accesses (at 302) a startup node list stored locally in the configuration directory to determine the nodes that are in the parallel processing system 10. Next, the reconcile module instance initiates (at 304) a connection with the reconcile module instances in the other nodes. This is accomplished by messaging over the interconnect network 14. The reconcile module instance then waits (at 306) for a predetermined time period to elapse. The reconcile module instance updates (at 308) the node list with identifiers of all nodes that have replied. In some cases, some nodes (which may be defective or otherwise unavailable) may not reply. After the time period has elapsed, the node list is updated by excluding the non-replying nodes from the node list so that they will not be part of the parallel version switch.

The reconcile module instance in each node then determines (at 310) the lowest node identifier (ID) from the node list. The reconcile module instance then determines (at 312) if the node it is running on is the one with the lowest node ID. If not, then the reconcile module instance waits (at 314) for a master start event, which is an event transmitted by a master reconcile instance to start the parallel version switch. If the reconcile module instance determines that it is running on the node with the lowest node ID, then it marks (at 316) itself as the master reconcile instance (at 316). Alternatively, instead of using the lowest node ID as the criterion to identify a master node, some other criteria may be used―e.g., highest node ID.

The master reconcile instance then posts a master start event (at 318) to all the other nodes 12 in the node list. The reconcile module instances of the non-master nodes may be referred to as server reconcile instances.

Next, the master reconcile routine starts (at 322) the rules interpreter module 110. The rules interpreter module 110 invokes (at 324) the information collector module 112 indirectly via the message interface 104 in each of the nodes 12 to collect control directory information 136 (Fig. 2), which includes, among other things, the operating system version in each node, the running versions of the application modules 20 in each node, the desired versions of the application modules 20 in each node, and the available versions of the application modules in each node. The information collected by the remote information collector routine 112 is passed back to the rules interpreter module 110 over the interconnect network 14.

Next, the rules interpreter module 110 running on the master node executes (at 326) the startup rules to determine if an upgrade of any of the application modules 20 is needed. If so, the rules interpreter module 110 starts a version switch process. The rules interpreter module 110 starts a client reconcile module 18 instance on every node with parameters (component and version) as defined by the startup rules. Each node started client instance instructs the existing server reconcile module 18 instance previously started to switch the specified component to the specified version. Next, the running version of the application module is halted (at 328). The running version of the application module 20 is then unloaded (at 330) and the desired version is then loaded (at 334). As used here, "unloading" and "loading" may refer to the process of updating the configuration data in each node to perform the version switch. For example, registry entries may be updated to point to the correct versioned directory. Other updates may also be performed. Next, the control information 136 (Fig. 2) is updated to clear the desired version flag and to reset the running version flag to the new version of the application module. Each node returns a success or fail indication to the rules interpreter module 110. The rules interpreter module 110 then determines (at 336) if the version switch was successful. If not, the failed node or nodes are excluded from the node list (at 338) and the rules interpreter module 110 is restarted (at 322). If the version switch was successful, then the rules interpreter module continues (at 326) to execute the startup rules. Further version switching may be performed for other application routines.

After all upgrades have been completed, the rules interpreter module 110 verifies (at 340) that all nodes that are part of the node list are running the same versions of the application routines 20. After verification, all application modules 20 are ready for execution.

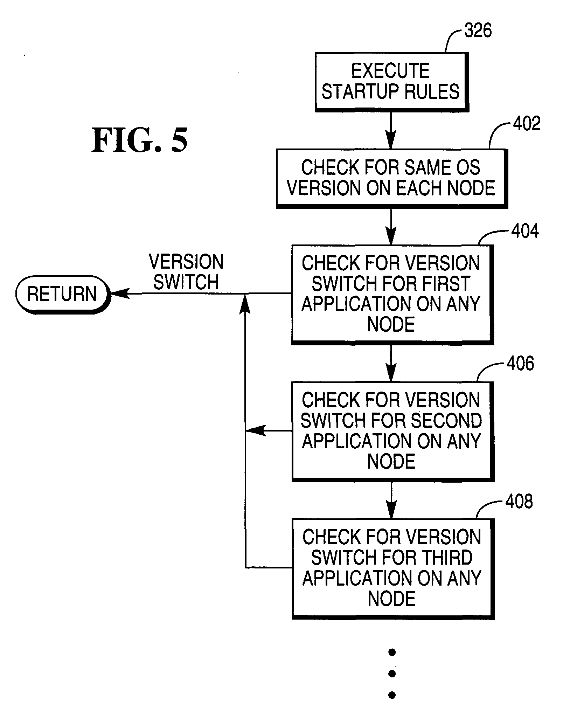

Referring to Fig. 5, the execution of the startup rules as performed by the rules interpreter module 110 is illustrated. The rules interpreter module 110 first checks (at 402) to make sure that each node that is part of the participating node list has the same operating system version. As illustrated in Fig. 5, multiple application routines may be present in each node. The rules interpreter module 110 next checks (at 404) if a version switch for a first application module is desired on any node, and if so, if the first application module version is available on each node. If both conditions are true, as determined at 404, then a version switch for the first application module is performed.

After switching versions of the first application, if any, the rules interpreter module 110 may check (at 406) if a version switch of a second application module is desired and if the desired version is available on each node. If so, a version switch of the second application module is performed. The same checks are performed (at 408) with each of the other application modules 20 that may be in the nodes 12.

A parallel software version switch method and apparatus has been described in which a new version may be installed into a multi-node parallel processing system while a current version of the software is still running in the system. This is referred to as "hot" version switching, which may be performed on application modules as well as other software layers, including kernel-mode drivers. After installation, a version switch may be performed by starting a version switch routine instance in each of the nodes in the parallel processing system. Next, a master version switch routine is defined on one of the nodes. This may be the node having the lowest node ID or some other predetermined criteria. The master version switch routine then determines what the desired version of the software is, which may be determined by accessing control information stored in the nodes. Version switching is then performed, following which the desired version may be set as the running version. In accordance with some embodiments, the down time of the parallel processing system is reduced as compared to conventional install/uninstall techniques. This increases availability to users who may wish to access data stored on the parallel processing system.

As discussed above, the various nodes 12 each includes various software layers, routines, or modules. Such software layers, routines, or modules are executable on corresponding control units. The various control units in the network elements may each include a microprocessor, a microcontroller, a processor card (including one or more microprocessors or microcontrollers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs). Instructions that make up the various software routines, modules, or layers in the various network elements may be stored in respective storage devices. The instructions when executed by a respective control unit cause the corresponding network element to perform programmed acts.

The instructions of the software routines, modules, or layers may be loaded or transported to each node 12 in one of many different ways. For example, code segments including instructions stored on floppy disks, CD or DVD media, a hard disk, or transported through a network interface card, modem, or other interface device may be loaded into the system and executed as corresponding software routines, modules, or layers. In the loading or transport process, data signals that are embodied in carrier waves (transmitted over telephone lines, network lines, wireless links, cables, and the like) may communicate the code segments, including instructions, to the network element. Such carrier waves may be in the form of electrical, optical, acoustical, electromagnetic, or other types of signals.

While the invention has been disclosed with respect to a limited number of embodiments, those skilled in the art will appreciate numerous modifications and variations therefrom.

## Claims

1. A method of switching between versions of software in a system having a first number of processing nodes, comprising:
storing plural versions including a running version and a desired version of the software in the system;
identifying less than the first number of nodes capable of performing a software version switch; and
selecting the desired version of the software to run in each of the identified processing nodes.

2. The method of claim 1, wherein identifying the nodes includes determining if a predetermined response is received when starting the version switch.

3. The method of claims 1 or 2, further comprising maintaining a list of nodes participating in the version switch.

4. The method of any of claims 1 to 3, further comprising checking to ensure that the desired version is available in each of the identified processing nodes.

5. The method of any of claims 1 to 4, wherein storing the plural versions includes storing the running version in a first directory and the desired version in a second directory.

6. The method of claim 5, wherein the first and second directories are provided in each of the processing nodes.

7. The method according to any preceding claim, further comprising starting a version switch software instance in each of the identified nodes and selecting one of the version switch software instances as a master instance.

8. The method of claim 7, further comprising the master instance determining if version switching is desired in any of the identified nodes and issuing a version switch command to each node to perform switching to the desired version.

9. The method of claim 8, wherein the master instance determines if version switching is desired by accessing control information including flags identifying a desired version and a running version.

10. The method according to any preceding claim, each of the identified nodes storing control information to indicate the running version.

11. The method of claim 10, at least one of the identified nodes storing control information to indicate the desired version.

12. The method of claim 11, further comprising determining whether a version switch is indicated based on the stored control information.

13. The method of claim 12, further comprising each node updating its control information after the version switching.

14. The method according to any preceding claim, further comprising verifying that each node is running the same operating system version.

15. The method of claim 1, wherein the storing, identifying, and selecting are performed before starting the running version of the software or after the running version of the software is started.

16. A parallel processing system comprising:
a plurality of nodes each running a first version of a software module and containing at least another version of the software module; and
each node adapted to launch a startup instance to perform a switch between the first version of the software and the other version in each of the plurality of nodes.

17. The parallel processing system of claim 16, further comprising selecting one of the startup instances as a master startup instance.

18. The parallel processing system of claim 17, wherein the master startup instance determines if a version switch of the software module is to be performed.

19. The parallel processing system of claim 18, wherein each node stops execution of the software module if the software module is running.

20. The parallel processing system of claim 19, wherein each node unloads the first version of the software module.

21. The parallel processing system of claim 20, wherein each node loads the other version of the software module.

22. The parallel processing system of claim 16, wherein each node contains control information to identify an executing software module version and a desired software version.

23. The parallel processing system of claim 16, further comprising a tool to install the other version of the software module while the first version is running.

24. The parallel processing system of claim 16, further comprising one or more storage devices containing a first directory to store at least a portion of the first version and a second directory to store at least a portion of the second version.

25. The parallel processing system of claim 16, wherein each node includes multiple directories to store corresponding ones of the first version and at least one other version.

26. The parallel processing system of claim 16, wherein each node includes a WINDOWS® operating system.

27. The parallel processing system of claim 16, wherein the first version of the software module includes a kernel-mode driver.

28. An article including one or more machine-readable storage media containing instructions for performing software version switching in a system having a plurality of nodes, the instructions when executed causing the system to perform the method of any of claims 1 to 15.

29. A computer program comprising program instructions for causing a computer system to perform the method of any of claims 1 to 15.

30. A data structure stored in memory for use in performing switching between versions of software in a parallel processing system, the data structure comprising instructions which when executed causing the system to perform the method of any of claims 1 to 15.
